# EUROPÄISCHE PATENTANMELDUNG

(11) **EP 2 570 878 A1**
(43) Veröffentlichungstag der Anmeldung: **20.03.2013**
(21) Anmeldenummer: 11181728.4
(22) Anmeldetag: 17.09.2011
(51) Int. Cl.: G05B 19/409

(54) **CNC-Maschine ohne Bedienkonsole**

(71) Anmelder: Mikron Agie Charmilles AG, 2560 Nidau (CH)
(72) Erfinder: Besuchet, Jean-Philippe, 2000 Neuchâtel (CH); Meier, Konrad, 2563 Ipsach (CH); Kohler, Markus, 2555 Brügg (CH)
(74) Vertreter: De Colle, Piergiacomo

(57) **Zusammenfassung**

Die Erfindung betrifft eine CNC-Maschine bzw. ein CNC-Bearbeitungszentrum für die automatisierte und computergesteuerte Herstellung oder Bearbeitung von Bauteilen. Erfindungsgemäss weist die CNC-Maschine kein an ihr angebrachtes Bedienmodul oder an ihr angeschlossenes Bedienmodul auf, welches während des Betriebes der CNC-Maschine permanent mit der CNC-Maschine verbunden bleibt.

## Beschreibung

Die Erfindung bezieht sich auf eine CNC-Fräsmaschine, bevorzugt ein CNC-Bearbeitungszentrum gemäss dem Oberbegriff des Patentanspruches 1.

Im Werkzeugmaschinenbau sind CNC-Fräsmaschinen, -Drehmaschinen und entsprechende Bearbeitungszentren heute Stand der Technik. CNC-Maschinen (Computerized Numerical Control) sind Werkzeugmaschinen, welche mittels eines Computers gesteuert werden und aus Roh- bzw. Bauteilen (z.B. Aluminium-Blöcke) gewünschte Werkstücke herstellen. Die geometrische Form der herzustellenden - d.h. zu fräsenden oder drehenden - Werkstücke wird bei CNC-Maschinen in der Regel in den Speicher der Werkzeugmaschinensteuerung geladen (zusammen mit weiteren Bearbeitungsdaten wie Geometrie der Werkzeuge, Drehzahlen, Vorschub etc.) und dort abgespeichert. Die Steuerung der CNC-Maschine kann daraufhin die gewünschten Werkstücke aus dem Rohteil automatisch und computergesteuert mit hoher Präzision herstellen.

Der Vorteil gegenüber mechanisch gesteuerten Maschinen liegt einerseits in der höheren Präzision bei der Bauteilbearbeitung, der Herstellbarkeit wesentlich komplexerer Bauteile, in der wesentlich höheren Bearbeitungsgeschwindigkeit der Bauteile und auch im hohen Automatisierungsgrad bei der Bearbeitung. Gerade Letztere gewährleistet eine hohe Produktivität bei gleichbleibender Qualität, was die günstige Fertigung bei grossen Stückzahlen favorisiert. Weiter können CNC-Werkzeugmaschinen auch zu Fertigungssystemen miteinander verbunden werden.

CNC-Maschinen sind mit dem Aufkommen von Computersteuerungen Ende der 70er- und vor allem in den 80er-Jahren schrittweise aus mechanisch gesteuerten oder mit Analogtechnik ausgestatteten Werkzeugmaschinen entstanden. Vor den eigentlichen Computersteuerungen wurden in mechanisch gesteuerten Werkzeugmaschinen elektromechanische Steuerungen eingesetzt. Weil zu Beginn der Steuerungstechnik auch diese elektromechanische Systeme mit konventionellen, elektrischen bzw. elektromechanischen Schaltern und Ähnlichem nicht günstig zu haben waren, wurden konventionelle, von Hand zu bedienende Werkzeugmaschinen beispielsweise mit trag- und anschliessbaren Steuerungskonsolen mit analoger Schalttechnik versehen. Ein Beispiel hiervon zeigt die US 3,733,961. Die darin offenbarte Steuerung - aus analoger Schalttechnik bestehend - konnte mit verschiedenen konventionellen Werkzeugmaschinen verbunden werden, so dass ein gewisser - und an heutigen Massstäben wohl sehr beschränkter - Automatisierungsgrad erreicht werden konnte. Hauptvorteil einer derartigen tragbaren Steuerung war natürlich, dass sie an verschiedenen Werkzeugmaschinen eingesetzt werden konnte. Andererseits war der verbesserte, d.h. automatisierte Betrieb einer Werkzeugmaschine im Sinne der US 3,733,961 nur dann und auch nur solange möglich, wie die anschliessbare Steuerungskonsole mit der jeweiligen Werkzeugmaschine verbunden war und blieb.

Mit dem Einzug der Computertechnik wurde die analoge Schalttechnik aus den Maschinensteuerungen abgelöst. Dank der Speichermöglichkeit konnten nun auch komplexe Bauteile automatisiert gefertigt werden.

In den vergangen Jahrzehnten wurden schrittweise immer modernere und leistungsfähigere CNC-Maschinen entwickelt. Allen geblieben ist jedoch ihre Verbindung zum Computer: Alle bekannten Geräte weisen einen Bedienpult zur Steuerung der CNC-Maschine auf. In der Regel ähnelt dieser stark an einen Computer und weist dabei eine Bedienungsanzeige und Tasten (allenfalls in Form eines Touchscreens) zur Bedienung der CNC-Maschine auf.

Die DE 38 13 590 A1 offenbart eine Werkzeugmaschine mit einer Maschinensteuerung, welche in einem separaten Steuerpult installiert und über eine Verbindungsleitung mit der Werkzeugmaschine verbunden ist. Diese Offenlegungsschrift offenbart darüber hinaus ein als tragbares Handsteuergerät ausgebildetes Fernsteuerteil auf. Das Fernsteuerteil ist mit einem Tastenfeld zur Eingabe von Befehlen und Daten und mit einem Anzeigefeld bzw. Display ausgestattet. Das Fernsteuerteil kann drahtlos Daten mit der Steuerung der Maschine austauschen. Mit dem Fernsteuerteil können gewisse, an der Anzahl beschränkte Vorgänge an der Werkzeugmaschine ausgeführt werden (z.B. Verfahren einer Achse der Maschine). Trotz Fernsteuerteil weist auch diese Werkzeugmaschine ein Bedienpult auf, welches über eine Verbindungsleitung mit der Werkzeugmaschine fest verbunden ist und zur eigentlichen Steuerung und Programmierung der Maschine dient.

Die EP 1 257 886 offenbart ein Werkzeug- oder ein Koordinatenmessgerät, welches eine universell einsetzbare Bedieneinheit besitzt. Diese Bedieneinheit ist mit einem Bedienpult samt Bildschirm ausgestattet. Die Bedieneinheit wird mittels eines Lichtleiters mit der Werkzeugmaschine z.B. eine CNC-Fräsmaschine, verbunden. Auch bei dieser Lehre aus dem Stand der Technik ist die Werkzeugmaschine jedoch mit einem Rechner ausgestattet, welcher gemäss Beschreibung und Abbildungen, als konventioneller PC und insbesondere mit entsprechender Eingabeeinheit (d.h. konkret Bildschirm und Tastatur) ausgestaltet ist. Nebst der universellen anschliessbaren Bedieneinheit besitzt die Werkzeugmaschine gemäss EP 1 257 886 daher eine eigene fest eingebaute Konsole zur Bedienung (z.B. Programmierung) der Maschine.

Der vorliegenden Erfindung liegt die Aufgabe zugrunde, die Bedienung einer CNC-Maschine weiter zu vereinfachen.

Diese Aufgabe wird durch die Merkmale des unabhängigen Patentanspruches 1 gelöst.

Die erfindungsgemässen Idee beinhaltet, dass die CNC-Maschine - welche für die automatisierte und computergesteuerte Herstellung oder Bearbeitung von Rohteil en konzipiert und geeignet ist - kein an ihr permanent angebrachtes oder angeschlossenes Bedienmodul besitzt, welches auch während des Betriebes der CNC-Maschine permanent mit der CNC-Maschine verbunden bleibt.

Eine CNC-Maschine in der erfindungsgemässen Ausführung hat den Vorteil, dass sie nicht mit einem Bedienmodul (z.B. Bildschirm und Eingabemittel wie Touchscreen oder Tastatur) ausgestattet und ausgeliefert werden muss. Der Hersteller der CNC-Maschine kann also die damit verbundenen Herstell- bzw. Ausstattungskosten einsparen und kann dadurch auch den Verkaufpreis senken. Stattdessen liefert der Hersteller der CNC-Maschine ein separates Bedienmodul, welches zur Programmierung und/oder gezielten Steuerung der CNC-Maschine mit dieser Werkzeugmaschine ad hoc verbunden werden kann. Da die Kunden des CNC-Maschinenherstellers in aller Regel mehrere CNC-Maschinen kaufen oder in ihrem Betrieb aufweisen, genügt es, dass ein oder allenfalls zwei separate Bedienmodule zugekauft werden, um den gesamten Park an erfindungsgemässer Werkzeugmaschinen zu bedienen.

Die erfindungsgemässe CNC-Maschine kann auch ein sogenanntes CNC-Bearbeitungszentrum, auch Fertigungszentrum genannt, sein (z.B. ein 5-Achsen-Bearbeitungszentrum), welches für einen automatisierten Betrieb ausgerüstet ist. Ein derartiges CNC-Bearbeitungszentrum kann z.B. zur Komplettbearbeitung von Rohteilen ausgestattet sein. Ein CNC-Bearbeitungszentrum kann beispielsweise einen dreh- und schwenkbaren Maschinentisch, eine mehrachsig bewegbare Werkzeugspindel, wie auch automatische Werkzeug- wie Werkstückwechsler (z.B. Roboter) besitzen.

In der vorliegenden Anmeldung ist unter einem Bedienmodul eine Einheit zu verstehen, welche für die Programmierung und allgemeine Bedienung der CNC-Maschine gebraucht wird. Die Funktionen des Bedienmoduls der erfindungsgemässen CNC-Maschine entsprechen jenen von bekannten und fest eingebauten Bedienkonsolen an herkömmlichen und auf dem Markt erhältlichen CNC-Maschinen.

Unter einer permanenten Verbindung gemäss vorangehender Beschreibung gemäss Anspruch 1 werden sowohl drahtlose (z.B. per Funk) als auch Kabelverbindungen verstanden.

Bevorzugte Weiterbildungen der Erfindung ergeben sich aus den abhängigen Ansprüchen.

Die erfindungsgemässe CNC-Maschine, vorzugsweise CNC-Bearbeitungszentrum, welche für die automatisierte und computergesteuerte Herstellung oder Bearbeitung von Bauteilen gedacht ist, ist dadurch charakterisiert, dass sie kein an ihr angebrachtes oder angeschlossenes Bedienmodul aufweist, welches während des Betriebes der CNC-Maschine permanent mit der CNC-Maschine verbunden bleibt oder bleiben muss. Das bedeutet, dass die erfindungsgemässe CNC-Maschine für deren Programmierung und sonstige Bedienung zwar ein Bedienmodul benötigt. Jedoch gibt es während des normalen Betriebes der Werkzeugmaschine (z.B. automatisiertes Fräsen oder Drehen von Rohteilen, wie Turbinenschaufeln etc.) kein Steuerpult, Bedienmodul, oder Bedienkonsole etc. welche an der Maschine angebracht oder (z.B. per Funk oder Kabel) damit verbunden ist. Die CNC-Maschine arbeitet damit vollständig unabhängig und autark von einer Bedienkonsole. Die Werkzeugmaschine ist während dieser Zeit auch nicht mit einer solchen Bedienkonsole verbunden, so dass auch kein Bildschirm beispielsweise den Betriebszustand (Drehzahlen, Vorschub, Energieverbrauch etc.) signalisiert oder über eine Eingabeeinheit unmittelbar beeinflusst werden kann. Selbstverständlich gehört es zur Erfindungsidee, dass das Bedienpersonal die erfindungsgemässe CNC-Maschine bei Bedarf mit dem separaten Bedienmodul verbinden kann (z.B. per Funk oder Kabel), um so die CNC-Maschine ansteuern bzw. beeinflussen zu können. Hierzu gehört beispielsweise auch, dass Betriebsdaten, der detaillierte Status oder allenfalls - im Fall von Störungen oder Fehlermeldungen - auch Diagnosedaten zur CNC-Maschine auf dem separaten Bedienmodul angezeigt und vom Bedienpersonal kontrolliert werden können. Das Bedienpersonal hat dann die Möglichkeit, bei Bedarf gezielt in den Betrieb der CNC-Maschine einzugreifen. Erfindungsgemäss kann bei der Verbindungsaufnahme (bzw. Verbindungsaufbau) zwischen einer CNC-Maschine und dem separaten Bedienmodul vorgesehen sein, dass die laufende CNC-Maschine ihren Betrieb nicht unterbricht (d.h. die CNC-Maschine bearbeitet, z.B. fräst, das eingelegte Bauteil ungestört weiter).

In einer anderen Variante der angewandten Erfindung kann andererseits auch vorgesehen sein, dass bei Verbindungsaufnahme (bzw. Verbindungsaufbau) zwischen laufender CNC-Maschine und separatem Bedienmodul, die laufende CNC-Maschine ihren Betrieb (kontrolliert) unterbricht.

Die erfindungsgemässe CNC-Maschine weist daher auch keine an ihr permanent angebrachte oder eine damit — z.B. per Kabel oder Funk - verbundene Bedienungsanzeige auf. So auch keinen LCD-Bildschirm oder Touchscreen. Ebenso wenig weist sie ein Eingabeelement, wie z.B. eine Tastatur auf.

Die erfindungsgemässe CNC-Maschine ist hingegen zwecks Programmierung, Bedienung und/oder Steuerung mit einem separaten Bedienmodul koppelbar. Vorzugsweise ist dieses erfindungsgemässe Bedienmodul per Funk oder Kabel mit der CNC-Maschine koppel- bzw. verbindbar.

Das Bedienmodul kann über eine Bedienungsanzeige und einem Eingabemittel, vorzugsweise Tasten oder Touchscreen oder eine Kombination davon verfügen.

Natürlich ist auch vorgesehen, dass die CNC-Maschine, über einen vorgeschriebenen Notstopp-Knopf und einen Indikator über den Betrieb-/Nichtbetrieb an der CNC-Maschine selbst verfügt. Es sei darauf hingewiesen, dass man mit einem derartigen Knopf und einem derartigen Indikator (z.B. eine oder mehrere Lampen) die CNC-Maschine natürlich nicht bedienen, insbesondere weder Programmieren noch Steuern kann.

Die erfindungsgemässe CNC-Maschine bzw. das erfindungsgemässe CNC-Bearbeitungszentrum kann eine Fräsmaschine oder eine Drehmaschine sein.

## Patentansprüche

1. CNC-Maschine, vorzugsweise CNC-Bearbeitungszentrum, für die automatisierte und computergesteuerte Herstellung oder Bearbeitung von Bauteilen oder Rohteilen, **dadurch gekennzeichnet, dass** die CNC-Maschine kein an ihr angebrachtes Bedienmodul oder an ihr angeschlossenes Bedienmodul besitzt, welches während des Betriebes der CNC-Maschine permanent mit der CNC-Maschine verbunden bleibt.

2. CNC-Maschine, vorzugsweise CNC-Bearbeitungszentrum, nach Anspruch 1, **dadurch gekennzeichnet, dass** die CNC-Maschine auch keine an ihr angebrachte oder damit verbundene Bedienungsanzeige, vorzugsweise LCD-Bildschirm oder Touchscreen, und/oder Eingabeelement, vorzugsweise Tastatur, aufweist.

3. CNC-Maschine, vorzugsweise CNC-Bearbeitungszentrum, nach Anspruch 1 oder 2, **dadurch gekennzeichnet, dass** die CNC-Maschine zwecks Programmierung und/oder Steuerung mit einem separaten Bedienmodul, vorzugsweise per Funk oder Kabel, verbindbar ist.

4. CNC-Maschine, vorzugsweise CNC-Bearbeitungszentrum, nach einem der vorangehenden Ansprüche, **dadurch gekennzeichnet, dass** das separate Bedienmodul über eine Bedienungsanzeige und Eingabemittel, vorzugsweise Tasten oder Touchscreen, verfügt.

5. CNC-Maschine, vorzugsweise CNC-Bearbeitungszentrum, nach einem der vorangehenden Ansprüche, **dadurch gekennzeichnet, dass** an der CNC-Maschine ein Notstopp-Knopf und ein Indikator über den Betrieb-/Nichtbetrieb der CNC-Maschine angebracht ist.

6. CNC-Maschine, vorzugsweise CNC-Bearbeitungszentrum, nach einem der vorangehenden Ansprüche, **dadurch gekennzeichnet, dass** die CNC-Maschine eine Fräsmaschine oder eine Drehmaschine ist.

7. CNC-Maschine, vorzugsweise CNC-Bearbeitungszentrum, nach einem der vorangehenden Ansprüche, **dadurch gekennzeichnet, dass** bei der Verbindungsaufnahme zwischen laufender CNC-Maschine und separatem Bedienmodul die laufende CNC-Maschine ihren Betrieb nicht unterbricht.

8. CNC-Maschine, vorzugsweise CNC-Bearbeitungszentrum, nach einem der vorangehenden Ansprüche, **dadurch gekennzeichnet, dass** bei der Verbindungsaufnahme zwischen laufender CNC-Maschine und separatem Bedienmodul die laufende CNC-Maschine ihren Betrieb kontrolliert unterbricht.

9. Bedienmodul für eine CNC-Maschine oder einem CNC-Bearbeitungszentrum nach einem der vorangehenden Ansprüche.

10. Bedienmodul nach Anspruch 9, **dadurch gekennzeichnet, dass** das Bedienmodul über eine Bedienungsanzeige und Eingabemittel, vorzugsweise Tasten oder Touchscreen, verfügt und mit verschiedenen CNC-Maschinen zwecks jeweiliger Programmierung und/oder Steuerung der CNC-Maschine, vorzugsweise per Funk oder Kabel, verbindbar ist.

11. Verwendung eines, vorzugsweise per Kabel oder Funk, verbindbaren Bedienmoduls oder Bedienkonsole für die Bedienung und/oder Steuerung einer CNC-Maschine, vorzugsweise eines CNC-Bearbeitungszentrums, wobei die CNC-Maschine keine an ihr fest angebrachte Bedienkonsole oder an ihr angeschlossene Bedienkonsole aufweist, welche während des Betriebes der CNC-Maschine permanent mit der CNC-Maschine verbunden bleibt.
